Europäisches Patentamt

(19) European Patent Office

Office européen des brevets

(11) Publication number: 0 145 096

A2

(12) # EUROPEAN PATENT APPLICATION

(21) Application number: 84201802.0

(22) Date of filing: 05.12.84

(51) Int. Cl.⁴: **F 16 B 7/12**
**A 45 B 9/00**

(30) Priority: 08.12.83 NL 8304242

(43) Date of publication of application:
19.06.85 Bulletin 85/25

(84) Designated Contracting States:
AT BE CH DE FR GB IT LI LU NL SE

(71) Applicant: NEDERLANDSE CENTRALE ORGANISATIE
VOOR TOEGEPAST-NATUURWETENSCHAPPELIJK
ONDERZOEK
Surimamestraat 2
Delft(NL)

(72) Inventor: Kort, Johannes Anthonius Maria
Hoogstraat 12
NL-2381 BM Zoeterwoude(NL)

(74) Representative: Mommaerts, Johan Hendrik, Dipl.-Phys.
Octrooibureau Lux Willem Witsenplein 4
NL-2596 BK Den Haag(NL)

(54) An assembly of telescoping and mutually lockable tubes, particularly intended for a white cane.

(57) An assembly for telescoping tubes, in particular intended for forming a white cane for the blind, in which, between each pair of adjacent tubes (1,2), locking means are provided comprising leaf springs (9,10) arranged in a cap (3) which is fixed on the extremity of the inner tube (1) of said pair, the inner part (9) of each spring normally being situated at some distance from the bottom (4) of said cap (3), and the outer extremity (10) extending beyond the outer wall of said inner tube (1) and being adapted to engage a shoulder portion of a groove (11) in the inner wall of the outer tube (2) of said pair, thus providing a locking between said tubes (1,2), the inner extremity of the next narrower tube (1') penetrating into said cap (3) when being pushed inwards, then pulling said lead springs (9,10) sufficiently inwards for releasing said locking engagement.

*Fig. 1.*

An assembly of telescoping and mutually lockable tubes, particularly intended for a white cane.

Assemblies of tubes fitting into one another and, as the case may be, being conically tapered, in which any two adjacent tubes can be locked in the extended condition, are known for several purposes. The simplest locking is provided by a tight fitting of the conical extremities of a tube pair, which locking can be released by exerting an axial force, and in particular an impact force, in the inward sense. Another locking adapted to take up pressing forces in the inward sense comprises locking lugs resiliently supported on the inner tube of a pair, and adapted to snap into holes of the outer tube, which lugs are to be pressed inward for releasing the locking. Such a locking is known, for instance, in tent poles. Still another locking means comprises resilient claws which are driven outwards by means of a screw wedge when both tubes are mutually rotated.

Such tube assemblies are suitable for several purposes, and the kind of locking means depends on the longitudinal forces to be taken up.

A particular application of such a tube assembly is for providing a white cane (sensing cane for the blind). Nowadays rather long white canes are usual (having a length of about 1400 mm), which are specifically adapted for use outdoors, but are too long for use indoors and in vehicles. Therefore telescoping white canes have been developed, which, when not used, can be collapsed to a possibly small length.

A first known white cane which can quickly be extended and collapsed consists of tube sections tightly fitting into one another, i.e. with a locking of the first-mentioned kind. A disadvantage thereof is that, if, in use, a too large resistance is met with, at least the foremost tube section will be pressed inwards. Another disadvantage is that the fitting will gradually deteriorate.

- 2 -                                    0145096

In another known white cane locking means of the third mentioned kind are used, but the disadvantage thereof is that the individual tube sections are to be mutually rotated for releasing the locking which is time consuming, so that the usefulness is substantially impaired. The same holds for locking means of the second kind.

The invention provides a tube assembly with locking means providing an unambiguous locking, which are, nevertheless, quickly releasable.

Furthermore from NL-A 81 05 624 a tent pole consisting of an assembly of telescoping tubes is known which is provided with locking means of the second kind in which, in the narrower tube of a pair of adjacent tubes, a hair-pin spring is arranged, the extremities of which are adapted to abut, in the extended condition, against the end face of the adjacent wider tube, and, when being collapsed, the inner extremity of the still narrower tube preceding and fitting in the former tube can grip around said hair-pin spring which is, then, compressed so that the outwardly protruding extremities of said spring are retracted, and the narrower tube of the pair is released and can be inserted into the wider one. After the narrowest tube of the complete assembly is released, the whole assembly can be collapsed in a continuous movement, and, when extending the assembly, the opposite takes place, and no separate locking actions are required.

A disadvantage of this assembly is that the protruding extremities of the hair-pin springs are likely to cause wounds, in particular when, as in the case of a white cane or the like, the user will slide with one hand along the various tubes when extending or collapsing the assembly. Moreover locking by means of the off-set extremities of said springs against the end face of a next tube is vulnerable, and, furthermore, when unlocking there is a risk that the hair-pin springs will be pulled out from the tube in question, which will be particularly the case in tubes having a small diameter

0145096

and wall thickness.

The invention provides an assembly of tubes having a locking based on the last-mentioned principle, said locking being particularly suitable for white canes for the blind and similar assemblies with a small diameter, but can also be applied in thicker tubes such as tent poles.

To that end the assembly according to the invention is characterised by leaf springs arranged in a cap with an upstanding collar fixed in a tube end, a terminal portion of each spring being situated, in the untensioned condition, at some distance from the bottom of said cap, the free extremities of said springs extending beyond the outer wall of the tube in question and, in the extended condition of the assembly, engaging a shoulder portion of a groove in the inner wall of the adjacent wider tube, all this in such a manner that, when pushing inwards the preceding narrower tube, its extremity can penetrate into said cap and pull the leaf springs inwards to such an extent that the locking is released. The rim of the cap can be rounded or bevelled so as to facilitate the retraction of said springs.

In particular the leaf springs can be constructed as resilient tongues which are coherent with a more or less plane disc or ring, the latter, in the condition of use, being substantially parallel to the bottom of the cap. This disc or ring then serves as an abutment for the preceding narrower tube.

The collar of the cap can be provided with an extension piece fitting in the respective tube end, said extension piece being provided with slots for letting through the leaf springs. Also the outer rims of the cap can be provided with projections fitting in a recess of the respective tube for fixing said cap in said tube.

The narrowest tube of the assembly can be provided, at its extremity which is to be locked on the next wider tube, with locking means which can be actuated from the outside so as to initiate the contraction of the assembly. After unlocking this narrowest tube, the following wider tube can be unlocked thereby. In particular a pulling string extending through all the tubes can be used therefor, by means of which the locking means of the narrowest tube can be released.

For locking the narrowest or lower tube, preferably a locking means is used comprising a longitudinally split nut which is slidable inside said tube, in which nut an externally threaded end portion of the former tube can be screwed, the inner extremity of said end portion having a bevelled outer surface co-operating with a corresponding surface of said nut so that, by rotating said narrowest tube in respect of the next tube, said nut can be expanded and released respectively.

In order to prevent play between adjacent tubes when locked, which would impair the utility of the assembly as a sensing means, it is preferred to provide one of the tubes of a pair, and preferably the outer one, with a plastics sleeve having a conicity which is substantially equal to that of the other tube, so as to provide an elastic fitting between bo.h in the locked condition. Said sleeve is preferably arranged in a recessed wall portion of the outer tube, one extremity of said recessed wall portion forming the shoulder co-operating with the spring ends of the adjacent narrower tube. Preferably a hard ring is provided in the groove or recess of the outer tube, acting as the shoulder portion co-operating with the spring ends, so as to protect the relatively softer material of the tube against being damaged by the hard spring ends.

Such a tube assembly is particularly suitable for use as a white cane or for similar purposes.

The invention will be elucidated below by reference to a drawing, showing in:

Fig. 1 a partial section of mutually coupled extremities of two telescoping tubes with an embodiment of the locking means according to the invention;

Figs. 2 and 3 partial sections and a perspective view respectively of elements of the locking means of Fig. 1;

Fig. 4 a section of the last tube pair of an assembly according to the invention with a special embodiment of the locking means for said pair; and

Fig. 5 a modified embodiment of the assembly of Fig. 1.

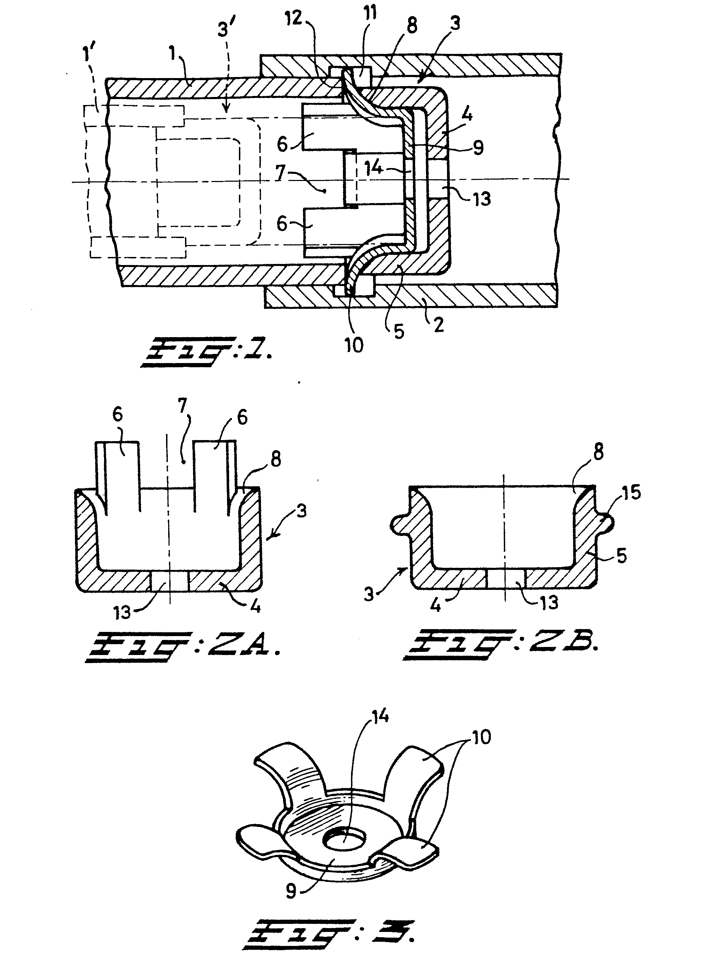

In Fig. 1 the extremities of two telescoping tubes 1 and 2 are shown, said tubes having tapered ends so that, in the extended position shown, the inner tube 1 more or less tightly fits into the outer one 2.

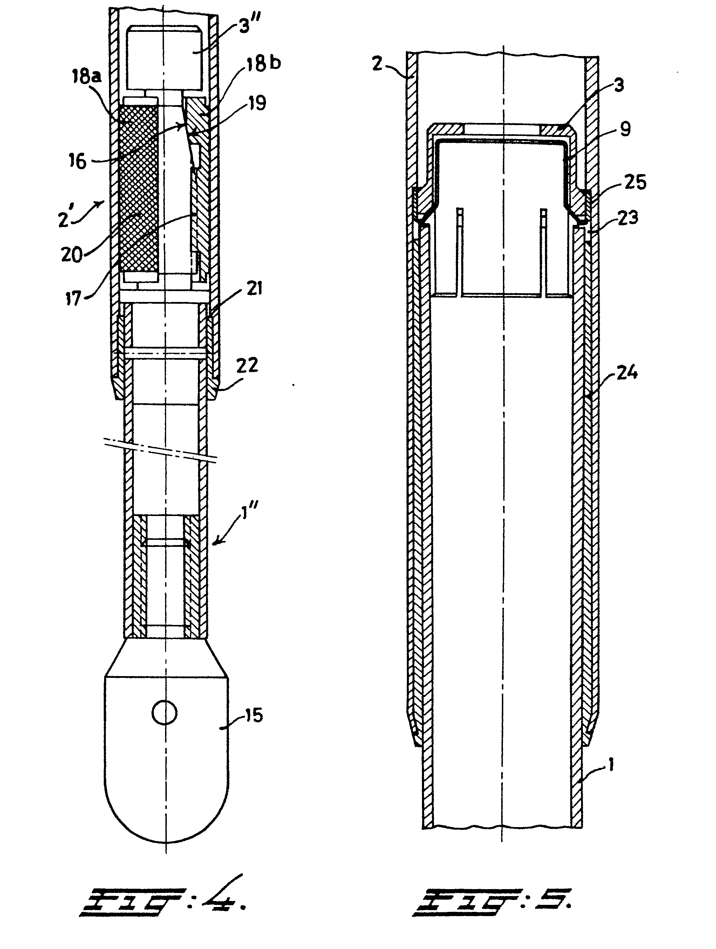

In the end portion of the tube 1 a cap 3 is inserted which is separately shown in Fig. 2A. This cap has a bottom 4 and an upstanding collar 5, the narrower part 6 thereof fitting in the tube 1 being provided with a number of slots 7 with a bevelled or rounded lower edge 8. The part 4 fits in the bore of the tube 1, and is secured therein in a suitable manner.

In the cap 3 a spring disc 9 according to Fig. 3 is arranged, which is provided with extending curved resilient tongues 10 fitting in the slots 7 of the cap 3. When, in the untensioned condition, these tongues rest on the rounded edges 8, the disc 9 is kept at some distance from the bottom 4 of the cap 3.

As appears from Fig. 1, the tongues 10 are shaped so that, in the untensioned condition thereof, they extend beyond the circumference of the tube 1, and, as shown, into a continuous groove 11 in the inner wall of the tube 2. Moreover these tongues engage the end face of the tube 1 so that, when a force directed to the right is exerted on the tube 1, the tongues 10 cannot slide away from the groove 11, and, thus, ensure a good locking.

In order to release the locking, it is sufficient to push inwards the next narrower tube 1', indicated by interrupted lines, and fitting in the other extremity of the tube 1, the cap 3' thereof, wich is also indicated by interrupted lines, and which is narrower than the cap 3, then being inserted into the latter. When pushing the narrower tube 1' still further, the disc 9 is driven towards the bottom 4, and then the tongues 10 are retracted from the groove 11. The tube 1 is then released and can be inserted into the tube 2. As soon as the pressure on the tube 1' is removed, the tongues 10 will relax somewhat so that the extremities thereof will press with some force against the inner wall of the tube 2, thus ensuring that the tube 1 will remain in the collapsed position by friction.

At the other extremity of the tube 2 a similar cap 3 is provided which operates in the same manner. Only the widest tube of the assembly does not comprise a cap 3.

The narrowest tube of the assembly can also comprise a similar cap 3 which, then, is provided with means for moving the tongues 10 inwardly. Therein the tongues 10 or locking means attached thereto can protrude through a hole in the next tube so that the former can be pressed inwards by hand as in the known tent pole couplings. It is also possible to provide a small slidable core in the cap 3 in question which is connected to a pulling string which is led through central holes 13 and 14 in the caps 3 and discs 9 respectively, towards the free extremity of the last tube, so that, when pulling it, the tongues 10 of the narrowest tube can be pulled inwards.

It is also possible to omit the portion 6 of the cap 3, and to provide on the outer wall of the collar 5 one or more lugs or the like, as shown at 15 in Fig. 2B, and suitable recesses should then be provided in the wall of the tube in question in which these lugs can be snapped. Furthermore holes for letting through the tongues 10 are to be provided in the tube wall.

In order to extend a collapsed assembly again, it is sufficient to pull the narrowest tube so far that its locking means bring about a locking with the next tube. The next tube is then taken along, and is, again, locked with the subsequent tube. At least the narrowest tube should then have such a length that it still can be gripped in the collapsed condition of the assembly. As long as the tongues in question have not yet snapped into the corresponding grooves 11, their extremities slide along the inner wall of the wider tubes. A certain rounding of these extremities is advisable.

As shown in Fig. 1, the grooves 11 are made so long that also in the case of given dimensional variations the tongues 10 will securely snap into the grooves in question. Moreover, in the extended position, a tight fit will be obtained because of the tapering shape of the tubes.

The assembly shown is designed, in the first place, for an extendable white cane consisting, for instance, of light bendable and wear-resistant glass fibres/plastics tube sections. The spring discs 9 provided with tongues 10 can be made, then, of spring steel. The tube material is sufficiently hard for withstanding the sliding of the extremities of the tongues.

Such a cane can quickly be extended and collapsed, and can withstand longitudinal compression  forces  when the free extremity of the cane hits an obstruction, without releasing the locking means. These locking means can be manufactured and mounted in a simple manner, and releasing these means does not require additional activities. The locking discs 9 always remain in place, and the tongues 10 are sufficiently strong.

Thus, for instance, a white cane having a length of 1400 mm can be assembled from seven tube sections, and the collapsed length needs not to be more than 250 mm, so that the collapsed cane can be easily put in a coat pocket or bag.

Moreover it will be clear that such an assembly can also be used for other purposes, such as for pointers, tent poles, fishing rods, antenna's, telescoping supports for emergency lighting and/or signal lamps on police or fire-brigade vehicles and the like, and, when additional seals are provided, also telescoping tube ducts can be constructed in this manner.

The number of tongues 10 can be smaller or larger, depending on the circumstances. In the case of white canes or pointer rods, two tongues will generally suffice. If the caps 3 do not possess an extension piece 6 and are fixed in a tube by means of the collar 5, the number of tongues 10 can be arbitrary, since, then, the slots 7 are no longer present and the rounded edge 8 is continuous.

Within the scope of the invention many modifications are possible. In many cases, for instance, differently shaped springs provided with locking means can be used which are fixed, in some suitable manner, in the tube, and, when inserting a narrower tube, can be bent inwardly and, thus, retract the associated locking means

In Fig. 4 (in which the same or primed reference numerals are used as in Fig. 1 for corresponding parts) a preferred embodiment of the narrowest or terminal tube section 1" is shown, fitting in a next wider section 2'. At the free end of the former a knob 15, made of a suitable material such as aluminium, is provided. The inner extremity of said section 1" is provided with a narrower cap 3" fitting in the cap 3' of section 2', not shown in Fig. 4, which corresponds to the caps 3' or 3 shown in Fig. 1.

The extremity of section 1" near said cap 3" is chamfered at 16, and the adjacent outer wall is provided with screw thread 17, the latter fitting in the corresponding thread of a longitudinally split nut comprising two halves 18a and 18b (but it is also possible to use a nut consisting of three or more parts). The nut halves 18a and 18b have an internal chamfer 19 corresponding to the chamfer 16 of the tube section 1". The outer surface 20 of said nut halves 18a and 18b is roughened so as to ensure a good friction grip on the inner wall of tube section 2'.

After pulling the lower section 1" outwards, the nut surface 20 will contact the slightly conical inner wall of tube section 2', and a shoulder 21 of a hollow nut 22 screwed in the extremity of tube section 2' prevents that the nut 18 is pulled outwards. If, then, the section 1" is rotated, the chamfered end part 16 will press the nut halves 18a en 18b outwards so as to wedge the nut inside the tube section 2'. For releasing the section 1", it is to be rotated in the opposite sense, and then section 1" can be pushed inwards until the cap 3" hits the spring inside the aforementioned cap 3' of section 2', thus releasing section 2' and so on.

In Fig. 5 a modified embodiment of the assembly of Fig. 1 is shown (in which, again, the same reference numerals have been used as in Fig. 1).

Therein the tubes can be mainly cylindrical, and then only the extremity of the narrower tube 1 inside the wider tube 2 is to be made outwardly diverging, as shown in an exaggerated way.

In the inner surface of the outer tube 2 a circumferential recess or wide groove 23 is provided in which an elastic plastics sleeve 24 is pressed having a sloping outer surface, the slope angle thereof being substantially equal to that of the extremity of the inner tube 1, this in such a manner that, in the fully extended condition, said sleeve 24 contacts the outer surface of the inner tube 1 and ensures a tight fit between both. Because of the elastic nature of the sleeve 24, such a tight fit can be ensured in spite of some dimensional variations and wear, and deformations caused by frequent use can be prevented thereby. For in the case of a white cane for the blind, any small movement between consecutive tube sections should be avoided since such movements would impair the function of the cane as a sensing means.

The same groove 23 can be used as the groove 11 of Fig. 1. In order to protect the edges of said groove 23 against being damaged by the hard edges of the tongues 10, a ring 25 made of steel or another hard material (preferably of about the same hardness as the tongues 10) is inserted in the groove 23, which ring serves as an abutment for said tongues in the locked condition of the tube in question, so as to prevent that the tube section 1 is pressed inwards.

It will be clear that it is also possible to provide an outer sleeve on the inner tube 1 co-operating with a tapering end of the outer tube 2, but it is, generally, simpler to provide a flaring end on a tube, and, moreover, the plastics sleeve 24 as shown is protected against any damage from the outside.

The ring 25 can also be used in the embodiment of Fig. 1, so as to protect the shoulders of the groove 11 against being damaged by the tongues 10.

<u>Claims</u>

1.  An assembly of telescoping tubes, in which any two adjacent tubes can be locked in the extended condition, a spring being provided in the smaller tube of the pair of adjacent tubes, the extremities of said spring being adapted to engage, in the extended condition, a transverse surface of the adjacent wider tube, and, when inserting the still smaller tube preceding this smaller tube of the pair and fitting therein, the inner extremity thereof can compress said spring so that the extremities thereof will be retracted, and the smaller tube of the pair is unlocked and can be inserted in-to the wider one, <u>characterised</u> by leaf springs (9, 10) arranged in a cap (3) with an upstanding collar (5) fixed in a tube end (1), a terminal portion (9) of each spring (10) being situated, in the untensioned condition, at some distance from the bottom (4) of said cap (3), the free extremities (11) of said springs extending beyond the outer wall of the tube (1) in question, and, in the extended condition of the assembly, engaging a shoulder portion of a groove (11) in the inner wall of the wider tube (2) of the pair, all this in such a manner  that, when pushing inwards the still narrower tube (1') preceding the narrower tube (1) of the pair, its extremity can penetrate into the cap (3) and  pull  the leaf springs (9) inwards to such an extent that the  locking is released

2.  The assembly of claim 1, <u>characterised</u> in that the rim (8) of the collar (5) is rounded or bevelled.

3.  The assembly of claim 1 or 2, <u>characterised</u> in that the leaf springs are constructed as resilient tongues (10) which are coherent with a more or less plane disc or ring (9), which, in the condition of use, is substantially parallel to the bottom (4) of the cap (3).

4.  The assembly of any one of claims 1..3, <u>characterised</u> in that the collar (5) of the cap (3) is provided with an extension (6) fitting in the respective tube end (1) and being adapted to be fixed therein, which extension (6) is provided with slots (7) for letting through the leaf springs.

5. The assembly of any one of claims 1..3, <u>characterised</u> in that the outer rim of the collar (5) of the cap (3) is provided with projections (15) fitting in a recess of the respective tube (1) for fixing said cap (3) in said tube (1).

6. The assembly of any one of claims 1..5, <u>characterised</u> in that the narrowest tube (1") of the assembly is provided with a locking means to be operated from the outside.

7. The assembly of claim 6, <u>characterised</u> in that the locking means of the narrowest tube (1") is provided with the same leaf springs (10) as the other tubes, which can be retracted by means of a pulling string extending through the other tubes.

8. The assembly of claim 6, <u>characterised</u> in that the locking means of the narrowest tube (1") of the assembly comprises a longitudinally split nut (18a, 18b), which is slidable within the adjacent wider tube (2'), and in which a terminal piece of said narrowest tube (1") provided with external screw thread and having a chamfered terminal surface (16) is screwed, which terminal surface (16 when being screwed into said nut (18a, 18b), engages a corresponding inner chamfered surface of said nut, so as to expand said nut (18a, 18b) against the inner surface of the adjacent tube (2').

9. The assembly of any one of claims 1..8, <u>characterised</u> in that, in one of the tubes (1, 2) of a pair, a circumferential recess (23) is provided which is directed towards the other tube, in which recess a plastics sleeve (24) is pressed, the surface thereof which is directed towards the other tube having an inclination in respect of the longitudinal axis which is substantially equal to the inclination of the latter wall, which sleeve (24) is adapted to provide an elastic clamping of the tubes (1, 2) in the extended condition.

10.    The assembly of any one of claims 1..9, <u>characterised</u> in that    the circumferential groove or recess (11, 23) is formed in the inner wall of the outer tube (1) of the pair, in which groove or recess a hard ring (25) is arranged serving as an abutment for the extremities (10) of the leaf springs.

**Fig:1.**

**Fig:2A.**

**Fig:2B.**

**Fig:3.**

0145096

FIG: 4.

FIG: 5.